# FASCICULE DE BREVET EUROPEEN

(11) **EP 0 324 115 B1**
(45) Date de publication et mention de la délivrance du brevet: **10.03.1993**
(21) Numéro de dépôt: 88120715.3
(22) Date de dépôt: 12.12.1988
(51) Int. Cl.: A47J 43/044, A47J 43/07

(54) **Pied de mixer à usage ménager**
Mixstab für Haushaltszwecke
Mixing device for domestic use

(30) Priorité: 31.12.1987 FR 8718474
(43) Date de publication de la demande: 19.07.1989
(73) Titulaire: MOULINEX, F-93170 Bagnolet (FR)
(72) Inventeur: Boin, Bernard Société Moulinex, F-50000 Saint-Lo (FR); Bouverie, Alain Paul Charles Société Moulinex, F-50000 Saint-Lo (FR)
(74) Mandataire: May, Hans Ulrich, Dr.

(56) Documents cités:
- CH-A- 287 813
- FR-A- 1 152 776
- FR-A- 1 176 214
- FR-A- 1 229 988

## Description

L'invention se rapporte aux pieds de mixage destinés en particulier à broyer des matières alimentaires immergées dans un liquide et comprenant une garde tubulaire dont la partie supérieure est adaptée à être montée sur un bloc moteur et dont la partie inférieure comporte une cloche dont le sommet est traversé par un arbre rotatif disposé longitudinalement dans ladite garde, l'extrémité supérieure dudit arbre étant destinée à être accouplée avec un entraîneur rotatif entraîné à grande vitesse par le bloc moteur, tandis que son extrémité inférieure est solidaire en rotation d'un outil de mixage disposé transversalement audit arbre.

Elle concerne, plus précisément, les pieds de mixage dans lesquels la cloche comprend une cloison qui s'étend vers le bas, hors de la cloche, transversalement à la paroi de sommet, présentant ainsi un bord inférieur situé à distance du bord périphérique de la cloche, et qui divise l'espace situé sous la cloche en deux zones, une zone dite d'aspiration dans laquelle est agencé l'outil de mixage, et une zone dite de refoulement située entre la face externe de ladite cloison et la paroi correspondante de la cloche, la région supérieure de ladite cloison présentant une ouverture de passage ménagée entre le sommet et le bord supérieur de la cloison et faisant ainsi communiquer ladite zone d'aspiration avec ladite zone de refoulement.

Un tel pied de mixage a été décrit, par exemple, dans les brevets FR - A - 1.152.776 et FR - A - 1.176.214.

Dans ces brevets, l'opération de mixage s'effectue au moyen d'un outil tournant dans une cage à cloison cylindrique et d'une hélice située au dessus de ladite cage, ledit outil et ladite hélice créant ainsi une aspiration centrale et un refoulement autour de la cage. L'inconvénient principal de ce dispositif réside dans le fait que, de par la symétrie obtenue par l'hélice et la cloison de la cage, un recyclage de la préparation liquide ou semi-liquide se produit selon des courants circulaires axiaux embrassant la cloison de la cage. Ce recyclage empêche donc une homogénéisation complète et rapide de la préparation liquide.

Un autre inconvénient a été constaté avec ce dispositif et réside dans le fait que, le bord inférieur de la cloison cylindrique de la cage se trouvant pratiquement dans un plan, il se produit un effet d'aspiration et de placage du pied de mixage sur le fond du récipient, empêchant ainsi le liquide de circuler et pouvant provoquer un échauffement du palier de l'outil de mixage et donc sa détérioration.

L'invention a pour but d'éliminer ces inconvénients en apportant un perfectionnement à ces pieds de mixage de manière qu'ils accomplissent parfaitement et rapidement les fonctions auxquelles ils sont destinés.

Selon l'invention, la cloison, présentant un contour de forme général rectangulaire, s'étend selon une surface incurvée, et se rattache par ses extrémités latérales à la paroi descendante de la cloche en deux régions diamétralement opposées de cette paroi descendante, le bord supérieur de ladite cloison étant rattaché aux extrémités latérales, pratiquement au niveau du bord périphérique de la cloche ménageant ainsi une ouverture de forme oblongue.

Le pied de mixage ainsi réalisé est particulièrement efficace, car, grâce à cette cloison incurvée et à son ouverture de passage oblongue, il se crée dans la cloche une dissymétrie créant un courant particulièrement violent entre les deux zones ce qui évite le phénomène de recyclage et favorise, soit une parfaite homogénéisation des potages, soit de façon surprenante, la réalisation d'émulsions telles que les mayonnaises.

Les caractéristiques et avantages de l'invention ressortiront d'ailleurs de la description qui va suivre, à titre d'exemple, en référence au dessin annexé dans lequel :

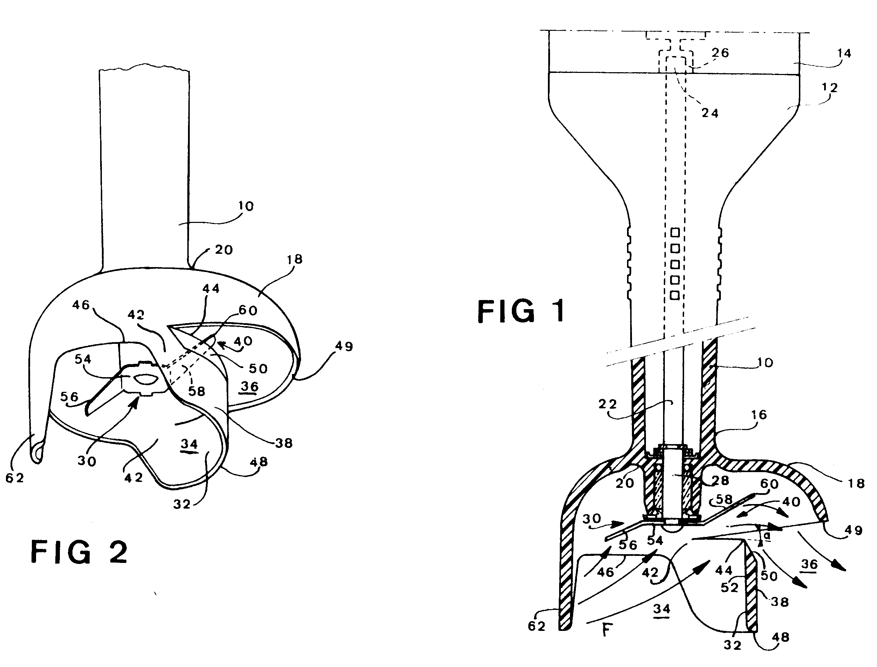

la figure 1 représente partiellement en élévation, et partiellement en coupe, un pied de mixage selon l'invention ; la figure 2 est une vue partielle du pied de mixage avec la cloche illustrée selon une vue en perspective.

Le pied de mixage représenté à la figure 1 comprend une garde tubulaire 10 dont la partie supérieure 12 est adaptée à être montée par exemple sur un mixeur comportant un bloc moteur 14 destiné à être tenu à la main, et dont la partie inférieure 16 comporte une cloche 18, de forme générale demi-sphérique montée excentrée par rapport à la garde 10 et dont le sommet 20 est aplati et est traversé par un arbre rotatif 22 disposé longitudinalement dans la garde 10, l'extrémité supérieure 24 de l'arbre 22 étant destiné à être accouplée avec un entraîneur rotatif 26 entraîné à grande vitesse par le bloc moteur 14, tandis que son extrémité inférieure 28 est solidaire en rotation d'un outil de mixage 30 disposé transversalement à l'arbre 22.

Selon l'invention, la cloche 18 comprend une cloison 32 s'étendant vers le bas transversalement à la paroi de sommet 20 et divisant ainsi l'espace situé sous la cloche en deux zones, une zone 34 dite d'aspiration dans laquelle est agencé l'outil de mixage 30, et une zone 36 dite de refoulement située entre la face externe 38 de la cloison 32 et la paroi correspondante de la cloche 18, la région supérieure de cette cloison 32 présentant une ouverture de passage 40 de forme oblongue s'étendant en longueur dans cette cloison, transversalement audit outil 30 et faisant ainsi communiquer la zone d'aspiration 34 avec la zone de refoulement 36.

Comme on le voit mieux sur la figure 2, cette cloison 32 présente un contour de forme générale rectangulaire et s'étend selon une surface incurvée, hors de la cloche. Les extrémités latérales 42 de cette cloison 32 sont rattachées à la paroi descendante de la cloche 18 en deux régions diamétralement opposées de cette paroi descendante, de façon à ce que le bord supérieur 44 de la cloison soit rattaché, en ses extrémités 42, pratiquement au niveau du bord périphérique 46 de la paroi descendante, mais avec un léger décalage en hauteur vers l'intérieur de la cloche par rapport à ce bord 46, et le bord inférieur 48 de cette cloison est situé à distance du bord périphérique 46 de cette paroi descendante : l'ouverture de passage 40 étant ainsi ménagée entre le sommet 20 de la cloche et le bord supérieur 44 de cette cloison 32.

On notera que le bord périphérique 46 de la cloche présente, dans la zone de refoulement 36, la forme d'un arc 49 qui s'étend dans un plan formant avec le bord supérieur de de la cloison 44 un angle aigu a de l'ordre de dix degrés, tandis que le bord supérieur 44 de la cloison 32 présente un chanfrein externe 50 s'étendant de la face interne 52 à la face externe 38 de cette cloison 32.

Pour assurer un fonctionnement parfait du pied de mixage en présence de matières alimentaires telles que carottes, pommes de terre, l'outil de mixage 30 comporte un moyeu 54 disposé orthogonalement à l'arbre 22 et portant deux couteaux 56-58 dissymétriques et opposés diamétralement, le couteau 56 étant dirigé vers le bas et son extrémité libre décrivant, dans un plan sensiblement situé au niveau du bord supérieur 44 de la cloison 32, un cercle dont un arc est pratiquement tangent à la paroi interne 52 de la cloison 32, tandis que le couteau 58, plus long que le couteau 54, est dirigé vers le sommet de la cloche et son extrémité libre 60 décrit un cercle dont un arc est situé au dessus du bord supérieur 44 de la cloison 32.

On comprendra que, lorsque le pied de mixage est plongé dans un liquide contenant des matières alimentaires, les couteaux 56 et 58 entraînés à grande vitesse par l'arbre 22 qui débouche dans la région centrale de la zone d'aspiration 34, créent un effet d'aspiration , en même temps qu'un broyage pratiquement complet dans cette zone 34, ainsi qu'un effet de refoulement dans la zone 36 favorisé par la forme particulière du débouché : bord relevé de l'arc 49 par rapport au bord 44 de la cloison 32, et chanfrein 50.

On notera que la disposition de la cloison 32, agencée sur presque toute sa hauteur sous le bord périphérique 46-49 de la cloche 18, contribue à créer une circulation de fluide pratiquement horizontale (flèches F de la figure 1) diminuant ainsi le phénomène de recyclage des matières alimentaires entre la zone de refoulement 36 et la zone d'aspiration 34. Afin de stabiliser le pied de mixage lorsqu'il repose sur le fond d'un récipient de travail, la cloche 18 comporte un appendice 62 s'étendant vers le bas depuis le bord périphérique 46 jusqu'au niveau du bord inférieur 48 de la cloison 32.

En outre, du fait de l'étroitesse de l'ouverture de passage 40 et du balayage de l'extrémité 60 du couteau 58 dans cette ouverture, on obtient non seulement un effet "venturi" qui favorise la circulation de liquide entre les deux zones d'aspiration et de refoulement, mais aussi, un balayage de cette ouverture évitant ainsi tout coincement de matière alimentaire ayant échappée au broyage.

## Revendications

1. Pied de mixage destiné en particulier à broyer des matières alimentaires immergées dans un liquide et comprenant une garde tubulaire (10) dont la partie supérieure (12) est adaptée à être montée sur un bloc moteur (14) et dont la partie inférieure (16) comporte une cloche (18) dont le sommet (20) est traversé par un arbre rotatif (22) qui est disposé longitudinalement dans ladite garde (10), et dont l'extrémité supérieure (24) est destinée à être accouplée avec un entraîneur rotatif (26) entraîné à grande vitesse par le bloc moteur (14), tandis que l'extrémité inférieure (28) est solidaire en rotation d'un outil de mixage (30) disposé transversalement audit arbre (22), ladite cloche (18) comprenant une cloison (32) qui s'étend vers le bas, hors de la cloche, transversalement à la paroi de sommet (20) présentant ainsi un bord inférieur (48) situé à distance du bord périphérique (46) de la cloche (18), et qui divise l'espace situé sous la cloche (18) en deux zones, une zone (34) dite d'aspiration dans laquelle est agencé l'outil de mixage (30), et une zone (36) dite de refoulement située entre la face externe (38) de ladite cloison (32) et la paroi correspondante de la cloche (18), la région supérieure de ladite cloison (32) présentant une ouverture de passage (40) ménagée entre le sommet (20) et le bord supérieur (44) de la cloison et faisant ainsi communiquer ladite zone d'aspiration (34) avec ladite zone de refoulement (36),
**caractérisé en ce que** la cloison (32), présentant un contour de forme général rectangulaire, s'étend selon une surface incurvée, et se rattache par ses extrémités latérales (42) à la paroi descendante de la cloche (18) en deux régions diamétralement opposées de cette paroi descendante, le bord supérieur (44) de ladite cloison étant rattaché aux extrémités latérales (42) pratiquement au niveau du bord périphérique (46) de la cloche (18) ménageant ainsi une ouverture de forme oblongue.

2. Pied de mixage selon la revendication 1,
**caractérisé en ce que** l'outil de mixage (30) est agencé pratiquement en regard de l'ouverture (40) de manière à favoriser le passage des matières alimentaires broyées de la zone d'aspiration (34) à la zone de refoulement (36).

3. Pied de mixage selon la revendication 1 ou 2,
**caractérisé en ce que** le bord périphérique (46) de la cloche présente, dans la zone de refoulement (36), la forme d'un arc (49) qui s'étend dans un plan formant avec le bord supérieur (44) de la cloison (32) un angle aigu a, tandis que le bord supérieur de ladite cloison présente un chanfrein externe (50) s'étendant de la face interne (52) à la face externe (38) de cette cloison (32).

4. Pied de mixage selon l'une quelconque des revendications précédentes,
**caractérisé en ce que** l'outil de mixage comporte deux couteaux opposés (56, 58) dont au moins l'un (56) est dirigé vers le bas et son extrémité libre décrit, dans un plan situé au niveau du bord supérieur (44) de la cloison, un cercle dont un arc est pratiquement tangent à la paroi interne (52) de la cloison (32).

5. Pied de mixage selon la revendication 4,
**caractérisé en ce que** l'autre couteau (58) est dirigé vers le sommet (20) de la cloche (18) et son extrémité libre (60) décrit un cercle dont un arc est situé au-dessus du bord supérieur (44) de la cloison (32) et balaye ainsi l'ouverture de passage (40) de manière à éviter tout coincement des matières alimentaires broyées dans l'ouverture de passage (40).

6. Pied de mixage selon l'une quelconque des revendications précédentes,
**caractérisé en ce que** la cloche (18), présentant la forme générale d'une demi-sphère à sommet aplati, est montée de façon excentrée par rapport à la garde (10) de sorte que l'arbre (22) débouche dans la région centrale de la zone d'aspiration (34).

## Claims

1. A mixing device adapted more particularly to the grinding of foodstuffs immersed in a liquid, comprising a tubular guard (10) whose upper portion (12) is adapted to be mounted on a motor unit (14) and whose lower portion (16) comprises a bell-shaped element (18) through whose top (20) a rotary shaft (22) extends which is disposed longitudinally in said guard (10) and whose upper end (24) is adapted to be coupled to a rotary entraining member (26) entrained at high speed by the motor unit (14), while its lower end (28) is connected for corotation to a mixing tool (30) disposed transversely of said shaft (22), said bell-shaped element (18) comprising a partition (32) which extends downwardly out of the bell-shaped element transversely of the top wall (20), thus having a lower edge (48) which is disposed at a distance from the peripheral edge (46) of the bell-shaped member (18) and which divides the space below the bell-shaped element (18) into two zones, an intake zone (34) in which the mixing tool (30) is disposed, and a delivery zone (36) lying between the external face (38) of said partition (32) and the corresponding wall of the bell-shaped member (18), the upper region of said partition (32) being formed between its top (20) and its upper edge (44) with a passage opening (40) via which the intake zone (34) communicates with the delivery zone (36), **characterized in that** the partition (32), which has a contour of generally rectangular shape, extends in a curved surface and is attached by its lateral ends (42) to the descending wall of the bell-shaped element (18) in two diametrically opposite regions of said descending wall, the upper edge (44) of said partition being attached to the lateral ends (42) practically at the level of the peripheral edge (46) of the bell-shaped element (18), thus producing an opening of oblong shape.

2. A mixing device according to claim 1, **characterized in that** the mixing tool (30) is so provided substantially opposite the opening (40) as to encourage the passage of the ground foodstuffs from the intake zone (34) to the delivery zone (36).

3. A mixing device according to claims 1 or 2, **characterized in that** the peripheral edge (46) of the bell-shaped member has in the delivery zone (36) the shape of an arc (49) which extends in a plane forming an acute angle a with the upper edge (44) of the partition (32), while the upper edge of the partition has an external chamfer (50) extending from the internal face (52) to the external face (38) of said partition (32).

4. A mixing device according to any of the preceding claims, **characterized in that** the mixing tool comprises two opposite blades (56, 58) at least one (56) of which is directed downwardly, its free end describing, in a plane lying at the level of the upper edge (44) of the partition, a circle an arc of which is substantially tangential to the inner wall (52) of the partition (32).

5. A mixing device according to claim 4, **characterized in that** the other blade (58) is directed towards the top (20) of the bell-shaped element (18) and its free end (60) describes a circle an arc of which lies above the upper edge (44) of the partition (32), so that it sweeps the passage opening (40) to prevent any clogging thereof by the ground foodstuffs.

6. A mixing device according to any of the preceding claims, **characterized in that** the bell-shaped element (18), having the general shape of a hemisphere with a flattened top, is mounted eccentrically in relation to the guard (10), so that the shaft (22) comes out in the central region of the intake zone (34).

## Patentansprüche

1. Mixstab besonders zum Zerkleinern von in eine Flüssigkeit eingetauchten Lebensmitteln, mit einem Schutzrohr (10), dessen oberer Teil (12) zum Verbinden mit einem Motorblock (14) bestimmt ist und dessen unterer Teil (16) eine Glocke (18) trägt, deren Scheitel (20) von einer längs in diesem Schutzrohr (10) angeordneten Welle (22) durchsetzt ist, deren oberes Ende (24) zum Kuppeln mit einem drehbaren Mitnehmer (26) eingerichtet ist, der mit hoher Geschwindigkeit vom Motorblock (14) angetrieben wird, während das untere Ende (28) drehfest mit einem quer zur Welle (22) angeordneten Mixwerkzeug (30) verbunden ist, wobei die Glocke (18) eine Trennwand (32) aufweist, die sich außerhalb der Glocke und quer zu deren Scheitelwand (20) nach unten erstreckt und so eine in einem Abstand vom umlaufenden Rand (46) der Glocke (18) liegende Unterkante (48) bildet und den Raum unter der Glocke (18) in zwei Zonen teilt: eine Ansaugzone (34), in der das Mixwerkzeug (30) angeordnet ist, und eine Förderzone (36), die zwischen der Außenseite (38) der Trennwand (32) und der entsprechenden Wand der Glocke (18) liegt, wobei der obere Bereich der Trennwand (32) eine Durchlaßöffnung (40) aufweist, die zwischen der Scheitelwand (20) und der Oberkante (44) der Trennwand ausgebildet ist und die Ansaugzone (34) mit der Förderzone (36) verbindet, dadurch gekennzeichnet, daß die mit einem im ganzen rechteckigen Umriß ausgebildete Trennwand (32) sich längs einer gebogenen Fläche erstreckt und durch ihre seitlichen Enden (42) mit der herabreichenden Wand der Glocke (18) an zwei diametral entgegengesetzten Bereichen dieser herabreichenden Wand verbunden ist, wobei die Unterkante (44) der Trennwand an den beiden seitlichen Enden (42) praktisch in der Höhe des umlaufenden Randes (46) der Glocke (18) verbunden ist, wodurch eine längliche Öffnung gebildet wird.

2. Mixstab nach Anspruch 1, dadurch gekennzeichnet, daß das Mixwerkzeug (30) praktisch gegenüber der Öffnung (40) so angeordnet ist, daß der Durchgang von zerkleinerten Lebensmitteln von der Ansaugzone (34) zur Förderzone (36) begünstigt wird.

3. Mixstab nach Anspruch 1 oder 2, dadurch gekennzeichnet, daß der Umfangsrand (46) der Glocke in der Förderzone (36) die Form eines Kreisbogens (49) aufweist, der sich in einer Ebene erstreckt, die mit der Oberkante (44) der Trennwand (32) einen spitzen Winkel a bildet, während die Oberkante der Trennwand eine äußere Abschrägung (50) aufweist, die sich von der Innenseite (52) zur Außenseite (38) dieser Trennwand (32) erstreckt.

4. Mixstab nach einem der vorangehenden Ansprüche, dadurch gekennzeichnet, daß das Mixwerkzeug zwei entgegengesetzte Messer (56, 58) trägt, von denen mindestens das eine Messer (56) nach unten gerichtet ist und sein freies Ende in einer in der Höhe der Oberkante (44) der Trennwand liegenden Ebene eine Kreis beschreibt, von dem ein Bogen praktisch die Innenwand (52) der Trennwand (32) tangential berührt.

5. Mixstab nach Anspruch 4, dadurch gekennzeichnet, daß das andere Messer (58) zum Scheitel (20) der Glocke (18) gerichtet ist und sein freies Ende (60) einen Kreis beschreibt, von dem ein Bogen oberhalb der Oberkante (44) der Trennwand (32) liegt und so die Durchlaßöffnung (40) überstreicht, um jedes Einklemmen von zerkleinerten Lebensmitteln in der Durchlaßöffnung (40) zu verhindern.

6. Mixstab nach einem der vorangehenden Ansprüche, dadurch gekennzeichnet, daß die Glocke (18), welche die allgemeine Form einer Halbkugel mit abgeflachtem Scheitel aufweist, bezüglich des Schutzrohrs (10) exzentrisch angeordnet ist, so daß die Welle (20) im Mittel bereich der Ansaugzone (34) endet.
